# EUROPEAN PATENT SPECIFICATION

(11) **EP 3 616 981 B1**
(45) Date of publication and mention of the grant of the patent: **26.05.2021**
(21) Application number: 19192632.8
(22) Date of filing: 20.08.2019
(51) Int. Cl.: B60N 2/42, B60N 2/427, B60N 2/68, B60N 2/70, B60R 21/055, B60R 21/207, B60R 21/00

(54) **VEHICLE SEAT**
FAHRZEUGSITZ
SIÈGE DE VÉHICULE

(30) Priority: 30.08.2018 JP 2018161140
(43) Date of publication of application: 04.03.2020
(73) Proprietor: TOYOTA JIDOSHA KABUSHIKI KAISHA, Aichi-ken, 471-8571 (JP)
(72) Inventor: MORI, Kazuya, TOYOTA-SHI, AICHI-KEN, 471-8571 (JP)
(74) Representative: Cabinet Beau de Loménie

(56) References cited:
- EP-A1- 2 193 956
- EP-A1- 2 623 367
- DE-A1-102008 029 339
- DE-U1- 20 301 516
- JP-A- 2008 142 120
- US-A1- 2009 134 686

## Description

### Background

### Technical Field

The present disclosure relates to a vehicle seat.

### Related Art

Japanese Patent Application Laid-Open (JP-A) No. 2017-149331 discloses a passenger protecting device that reduces the injury degree of passengers who are seated in vehicle seats that are disposed so as to face one another in the front-rear direction of a vehicle. In the passenger protecting device disclosed in that document, at the time of a collision of the vehicle, by expanding a traversing airbag between vehicle seats that are disposed so as to face one another, the traversing airbag is interposed between the passengers who are seated in these vehicle seats. Due thereto, the knees of the passengers who are seated in the vehicle seats contacting one another can be suppressed. US2009/134686 and EP2193956 disclose vehicle seats with energy absorbing member.

### Summary

At the time when a vehicle disposed with a vehicle seat that faces toward a rear side of the vehicle front-collides, or at the time when a vehicle disposed with a vehicle seat that faces toward a front side of the vehicle rear-collides, it may happen that the calves of the legs of the passenger seated in the vehicle seat will contact a seat cushion.

In view of the above-described circumstances, an object of the present disclosure is to provide a vehicle seat that can reduce the injury degree of the calves of the legs of a passenger at the time of a collision that is such that the calves are pushed against a distal end portion of a seat cushion.

A vehicle seat of a first aspect of the present disclosure is according to claim 1.

In accordance with the vehicle seat of the first aspect, at the time when the vehicle collides at a front side thereof in a state in which the vehicle seat is facing toward a rear side of the vehicle, or at the time when the vehicle collides at a rear side thereof in a state in which the vehicle seat is facing toward a front side of the vehicle, the energy absorbing member is pushed by the legs of the passenger.

Due thereto, the energy absorbing member irreversibly deforms, between the legs of the passenger and the front surface portion of the frame of the seat cushion. As a result, the injury degree of the calves of the legs of the passenger can be reduced.

In a vehicle seat of a second aspect of the present disclosure, in the vehicle seat of the first aspect, a seat cushion pad is mounted to the frame of the seat cushion, and the energy absorbing member is formed integrally with the seat cushion pad.

In accordance with the vehicle seat of the second aspect, the energy absorbing member is formed integrally with the seat cushion pad. Due thereto, the mounting of the energy absorbing member can be completed simultaneously with the work of mounting the seat cushion pad to the frame of the seat cushion.

In a vehicle seat of a third aspect of the present disclosure, in the vehicle seat of the first aspect, the energy absorbing member is fixed to the face of the front surface portion.

In accordance with the vehicle seat of the third aspect, the energy absorbing member is fixed to the face of the front surface portion of the frame of the seat cushion. Due thereto, the mounted posture of the energy absorbing member with respect to the frame of the seat cushion can be stabilized.

In a vehicle seat of a fourth aspect of the present disclosure, in the vehicle seat of the first aspect, the energy absorbing member is an airbag that inflates in a case in which the passenger inertially moves toward a rear side of the vehicle seat, and at least a portion of the airbag after inflation is disposed along the face of the front surface portion.

In accordance with the vehicle seat of the fourth aspect, the airbag inflates at the time when the vehicle collides at a front side thereof in a state in which the vehicle seat is facing toward the rear side of the vehicle, or at the time when the vehicle collides at a rear side thereof in a state in which the vehicle seat is facing toward the front side of the vehicle, i.e., at the time when the passenger inertially moves toward the rear side of the vehicle seat. The airbag is pushed by the legs of the passenger. Due thereto, the airbag irreversibly deforms, between the legs of the passenger and the front surface portion of the frame of the seat cushion. As a result, the injury degree of the calves of the legs of the passenger can be reduced.

In a vehicle seat of a fifth aspect of the present disclosure, in the vehicle seat of the fourth aspect, a seat cushion pad is mounted to the frame of the seat cushion, the airbag is disposed between the frame of the seat cushion and the seat cushion pad, and a portion at a seat front side of the seat cushion pad is configured to inflate toward a seat upper side due to the airbag inflating.

In accordance with the vehicle seat of the fifth aspect, when the airbag inflates, the portion at the seat front side of the seat cushion pad bulges toward the seat upper side. In this structure, due to the airbag being inflated in a case in which the passenger inertially moves toward the front side of the vehicle seat, the buttocks of the passenger can be restrained by the front end portion of the seat cushion pad. Further, due to the airbag being inflated in a case in which the passenger inertially moves toward the rear side of the vehicle seat, the airbag is pushed by the legs of the passenger and the injury degree of the calves of the legs of the passenger can be reduced.

The vehicle seats of the respective aspects of the present disclosure have the excellent effect of being able to reduce the injury degree of the calves of the legs of a passenger at the time of a collision which is such that the calves are pushed-against the distal end portion of a seat cushion.

### Brief Description of the Drawings

Fig. 1 is a partial sectional view showing a vehicle seat of a first embodiment from a seat transverse direction;
Fig. 2 is a cross-sectional view showing a front end portion of a seat cushion that is cut along line 2-2 of Fig. 1;
Fig. 3 is a cross-sectional view showing a vehicle seat of a second embodiment from a seat transverse direction, and shows a front end portion of a seat cushion in an enlarged manner; and
Fig. 4 is a cross-sectional view that corresponds to Fig. 3 and shows the vehicle seat of the second embodiment, and shows a state in which an airbag has inflated.

### Detailed Description

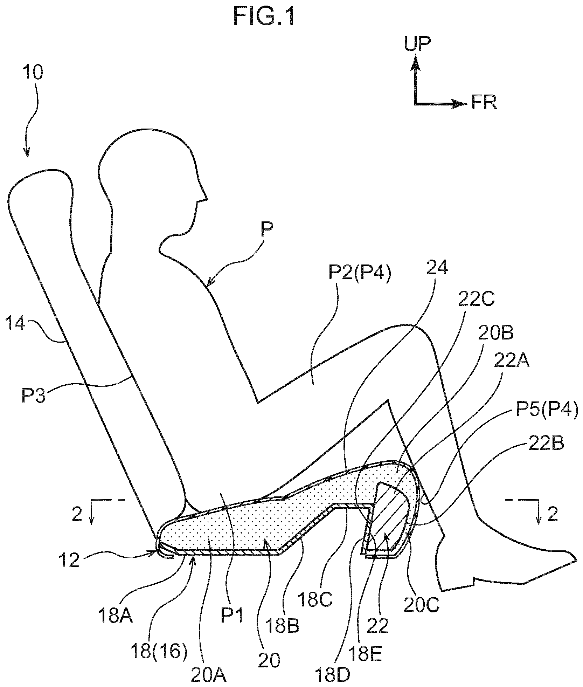

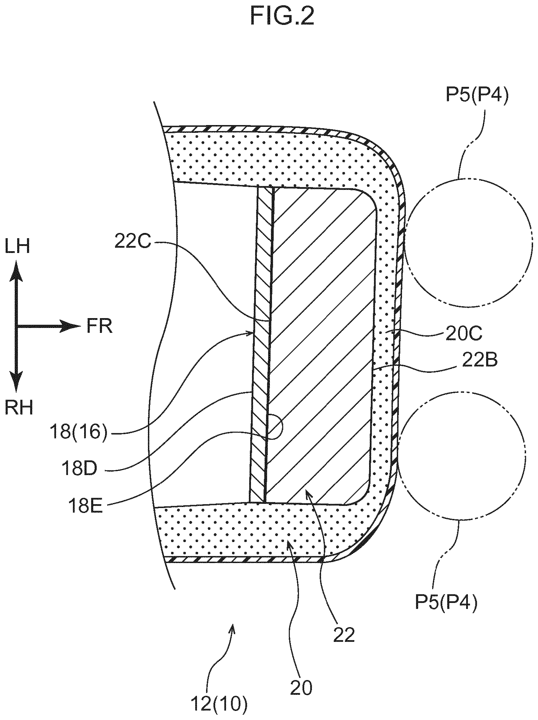

A vehicle seat 10 relating to a first embodiment of the present invention is described by using Fig. 1 and Fig. 2. Note that, in the following explanation, when description is given by using front-rear, left-right and up-down directions, they refer to the front-rear, the left-right, and the up-down directions as seen from a passenger who is seated in the vehicle seat 10. Further, arrow FR that is shown appropriately in the respective drawings indicates a seat forward direction, arrow UP indicates a seat upward direction, arrow RH indicates a seat rightward direction, and arrow LH indicates a seat leftward direction. Further, the left-right direction coincides with a seat transverse direction.

As shown in Fig. 1, the vehicle seat 10 of the present embodiment has a seat cushion 12 that supports buttocks P1 and a femoral region P2 of a passenger P (seated passenger), and a seatback 14 that supports a back portion P3 of the passenger P. The vehicle seat 10 of the present embodiment is provided in a cabin of a self-driving vehicle. The seat front side of the vehicle seat 10 is fixed in a state of facing toward a rear side of the vehicle. Note that there may be a structure in which the seat front side of the vehicle seat 10 is made to face toward a front side of the vehicle due to the vehicle seat 10 being rotated. Further, the vehicle seat 10 of the present embodiment can also be applied to manually-driven vehicles.

The seat cushion 12 has a panel member 18 that structures a portion of a frame 16 of the seat cushion 12, a seat cushion pad 20 that is mounted to the frame 16 of the seat cushion 12, and an energy absorbing member 22 that is joined to the panel member 18.

The panel member 18 is formed by using a metal plate such as a steel plate or the like. This panel member 18 has a bottom surface portion 18A that extends in the front-rear direction and the seat transverse direction at a position facing, in the up-down direction, the buttocks P1 of the passenger P seated on the seat cushion 12. Further, the panel member 18 has an inclined surface portion 18B that extends from a front end of the bottom surface portion 18A so as to incline toward the upper side while heading toward the seat front side. Moreover, the panel member 18 has a peak surface portion 18C that extends from a front end of the inclined surface portion 18B toward the seat front side and the peak surface portion 18C is substantially parallel to the front-rear direction and the transverse direction of the vehicle seat 10. Further, the panel member 18 has a front surface portion 18D that extends toward a lower side from a front end of the peak surface portion 18C and a face 18E faces toward a front side of the vehicle seat 10. In the present embodiment, the front surface portion 18D is inclined slightly toward a rear side of the vehicle seat 10 while heading toward the lower side.

The seat cushion pad 20 is formed by using a soft polyurethane foam or the like. The seat cushion pad 20 has a main portion 20A, which is disposed along upper surfaces of the bottom surface portion 18A, the inclined surface portion 18B and the peak surface portion 18C of the panel member 18. The seat cushion pad 20 further has an upper side covering portion 20B, which extends toward the seat front side from a front end of the main portion 20A and covers an upper side portion 22A of the energy absorbing member 22 that is described later. Further, the seat cushion pad 20 has a front side covering portion 20C that extends toward a lower side from a front end of the upper side covering portion 20B and covers a seat front side portion 22B of the energy absorbing member 22. Note that a portion, which can be seen by the passenger P, of the above-described seat cushion pad 20 is covered by a skin material 24.

The energy absorbing member 22 is formed by using a material that is harder than the seat cushion pad 20, and is formed in the shape of a rectangular block whose length direction is along the seat transverse direction. The energy absorbing member 22 is formed by ribs or a honeycomb structural body that is formed from a hard urethane resin or a foamed polypropylene resin.

A rear side surface 22C of the energy absorbing member 22 is joined via an adhesive or the like to the seat front side face 18E of the front surface portion 18D of the panel member 18. Due thereto, the energy absorbing member 22 is fixed to the panel member 18. Further, in the state in which the energy absorbing member 22 is fixed to the panel member 18, the upper side portion 22A projects out toward an upper side with respect to the peak surface portion 18C of the panel member 18.

Operation and effects of the present embodiment are described next.

When the vehicle 10 collides at a front side thereof in a state in which the above-described vehicle seat 10 faces toward a rear side of the vehicle, the passenger P who is seated in the vehicle seat 10 inertially moves toward the seat rear side (the vehicle front side). Due thereto, the back portion P3 of the passenger P pushes the seatback 14, and legs P4 (calves P5) of the passenger P push the energy absorbing member 22 via the front side covering portion 20C of the seat cushion pad 20. Due thereto, the energy absorbing member 22 deforms between the legs P4 of the passenger P and the front surface portion 18D of the panel member 18. As a result, the injury degree of the calves P5 of the passenger P can be reduced. In the present embodiment, the energy absorbing member 22 irreversibly deforms, between the legs P4 and the front surface portion 18D. By providing this energy absorbing member 22 that cannot be restored from its deformed state in this way, the kinetic energy of the legs P4 of the passenger P can be absorbed effectively. Due thereto, the injury degree of the calves P5 of the passenger P can be reduced effectively as compared with a structure that merely increases the thickness of the front side covering portion 20C of the seat cushion pad 20.

Note that the injury degree of the calves P5 of the passenger P can be effectively reduced in the same way also in a case in which the vehicle collides at a rear side thereof in a state in which the vehicle seat 10 is facing toward a front side of the vehicle.

Further, in the present embodiment, the energy absorbing member 22 is fixed via an adhesive to the front surface portion 18D of the panel member 18. Due thereto, the mounted posture of the energy absorbing member 22 with respect to the panel member 18 can be stabilized.

The energy absorbing member 22 and the seat cushion pad 20 may be made to be integral by insert molding or the like. In this structure, the mounting of the energy absorbing member 22 can be completed simultaneously with the work of mounting the seat cushion pad 20 to the frame 16 (the panel member 18 and the like) of the seat cushion.

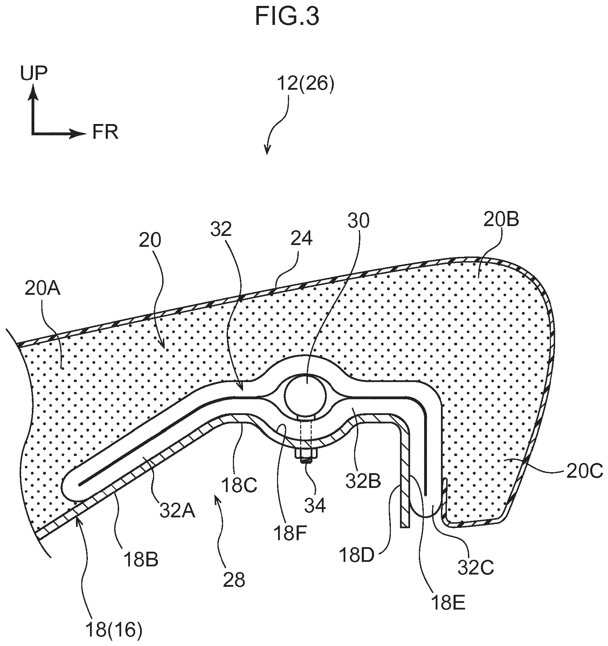

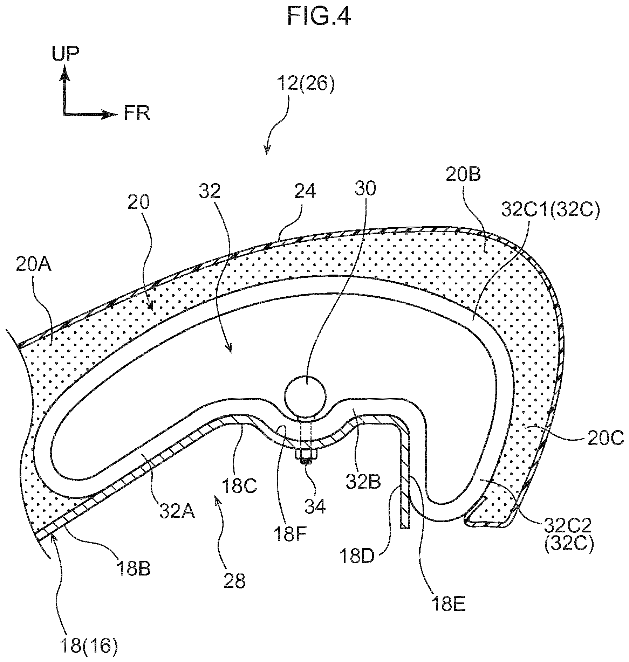

A vehicle seat 26 relating to a second embodiment of the present invention is described by using Fig. 3 and Fig. 4. Note that, at the vehicle seat 26 relating to the second embodiment, members and portions corresponding to those of the vehicle seat 10 relating to the above-described first embodiment are denoted by the same reference numerals as the corresponding members and portions of the vehicle seat 10 relating to the first embodiment, and there are cases in which description thereof is omitted.

As shown in Fig. 3 and Fig. 4, the vehicle seat 26 of the present embodiment has the feature that an airbag device 28 is provided instead of the energy absorbing member 22 (see Fig. 1) of the vehicle seat 10 relating to the first embodiment.

The airbag device 28 is provided between the panel member 18 and the seat cushion pad 20. This airbag device 28 is structured to include an inflator 30 that generates gas by being operated, and an airbag 32 that serves as an energy absorbing member and that inflates due to gas generated by the inflator 30 being supplied to an interior of the airbag 32.

The inflator 30 is disposed at a substantially central portion in the front-rear direction and the seat transverse direction of the airbag device 28. A fixing member 34 (stud bolt) for fixing the airbag device 28 to the panel member 18 is provided integrally with the inflator 30. Note that a cavity 18F is formed at the peak surface portion 18C of the panel member 18 at a region with which the fixing member 34 is engaged.

The airbag 32 is formed in a rectangular shape in the state before gas is supplied to the interior thereof (the state in which the airbag 32 is folded-up). Further, in the state in which the airbag device 28 is fixed to the panel member 18 via the inflator 30, a rear side portion 32A in the seat front-rear direction of the airbag 32 is disposed along an upper surface of the inclined surface portion 18B of the panel member 18. Further, a front-rear direction central portion 32B of the airbag 32 is disposed along an upper surface of the peak surface portion 18C of the panel member 18. A portion, which corresponds to the inflator 30, at the front-rear direction central portion 32B of the airbag device 28 bulges-out toward the upper side. A cavity 20D is formed at the main portion 20A of the seat cushion pad 20 so as to correspond to this bulge at the airbag device 28. Further, a seat front side portion 32C of the airbag 32 is disposed along the seat front side face 18E of the front surface portion 18D of the panel member 18.

Operation and effects of the present embodiment are described next.

When the vehicle collides at a front side thereof in a state in which the above-described vehicle seat 26 faces toward the rear side of the vehicle, the inflator 30 is operated. Then, due to the gas generated by the inflator 30 being supplied to the interior of the airbag 32, the airbag 32 inflates as shown in Fig. 4.

The seat rear side portion 32A, the front-rear direction central portion 32B, and an upper portion 32C1 of the seat front side portion 32C of the airbag 32 that has inflated push, toward the upper side, the seat front side portion of the main portion 20A and the upper side covering portion 20B of the seat cushion pad 20. As a result, the seat front side portion of the seat cushion pad 20 bulges toward the seat upper side. Further, a lower portion 32C2 of the seat front side portion 32C of the airbag 32 that has inflated is disposed along the seat front side face 18E of the front surface portion 18D of the panel member 18.

The passenger P who is seated at the vehicle seat 10 moves inertially toward the seat rear side, and the legs P4 (the calves P5) of the passenger P push the front side portion 32C of the airbag 32 via the front side covering portion 20C of the seat cushion pad 20. Due thereto, the lower portion 32C2 of the seat front side portion 32C of the airbag 32 deforms between the legs P4 and the front surface portion 18D. As a result, the kinetic energy of the legs P4 of the passenger P is absorbed, and the injury degree of the calves P5 of the passenger P can be reduced.

In the vehicle seat 26 of the present embodiment, due to the airbag 32 inflating, the seat front side portion of the seat cushion pad 20 bulges toward the seat upper side. Therefore, at the time when the vehicle collides at a rear side thereof in the state in which the vehicle seat 26 is facing toward the rear side of the vehicle, due to the inflator 30 being operated, the buttocks P1 of the passenger P who has moved inertially toward the seat front side can be restrained by the bulged-out front end portion of the seat cushion pad 20. As a result, the occurrence of the submarine phenomenon can be suppressed.

Note that, also in a case in which the vehicle collides at a rear side thereof in a state in which the vehicle seat 26 is facing toward the front side of the vehicle, similarly, the injury degree of the calves P5 of the passenger P can be effectively reduced. Further, also in a case in which the vehicle collides at a front side thereof in a state in which the vehicle seat 26 of the present embodiment is facing toward the front side of the vehicle, similarly, the buttocks P1 of the passenger P who has moved inertially toward the seat front side can be restrained by the bulged-out front end portion of the seat cushion pad 20.

Note that an example is described in which the vehicle seat 26 of the present embodiment is structured such that the seat front side portion of the seat cushion pad 20 bulges toward the seat upper side due to the airbag 32 inflating. However, the present disclosure is not limited to this. For example, there may be a structure in which an airbag that is disposed only along the front surface portion 18D of the panel member 18 is provided, and the seat front side portion of the seat cushion pad 20 does not bulge toward the seat upper side.

Although embodiments of the present disclosure have been described above, the present disclosure is not limited to the above, and can, of course, be implemented by being modified in various ways other than the above within the scope which is defined by the appended claims.

## Claims

1. A vehicle seat (10, 26) including a seat cushion (12) and a seat back (14), the vehicle seat (10) comprising:
a panel member (18) that structures a portion of a frame (16) of the seat cushion (12), which is adapted to support buttocks of a passenger, a front surface portion (18D) of the panel member (18) being disposed at a front part of the vehicle seat (10), and a face (18E) of the front surface portion (18D) facing toward a front side of the vehicle seat (10, 26); and
an energy absorbing member (22, 32) that is provided along the face (18E) of the front surface portion (18D), and the energy absorbing member (22, 32) is configured to irreversibly deform by being pushed toward a rear side of the vehicle seat (10, 26),
wherein the panel member (18) is formed by a metal plate, and the panel member (18) has a bottom surface portion (18A) that extends in a front-rear direction and a transverse direction of the vehicle seat (10, 26), an inclined surface portion (18B) that extends from a front end of the bottom surface portion (18A) so as to incline toward an upper side while heading toward the seat front side, a peak surface portion (18C) that extends from a front end of the inclined surface portion (18B) toward the seat front side, the peak surface portion (18C) being substantially parallel to the front-rear direction and the transverse direction of the vehicle seat (10), and the front surface portion (18D), which extends toward a lower side from a front end of the peak surface portion (18C).

2. The vehicle seat (10) of claim 1, wherein:
a seat cushion pad (20) is mounted to the frame (16) of the seat cushion (12), and
the energy absorbing member (22) is formed integrally with the seat cushion pad (20).

3. The vehicle seat (10) of claim 1, wherein the energy absorbing member (22) is fixed to the face (18E) of the front surface portion (18D).

4. The vehicle seat (26) of claim 1, wherein:
the energy absorbing member (32) is an airbag (32) that inflates in a case in which the passenger inertially moves toward the rear side of the vehicle seat (26), and
at least a portion of the airbag (32) after inflation is disposed along the face (18E) of the front surface portion (18D).

5. The vehicle seat (26) of claim 4, wherein:
a seat cushion pad (20) is mounted to the frame (16) of the seat cushion (12),
the airbag (32) is disposed between the frame (16) and the seat cushion pad (20), and
a portion at a seat front side of the seat cushion pad (20) is configured to bulge toward a seat upper side due to the airbag inflating.

## Patentansprüche

1. Fahrzeugsitz (10, 26), der ein Sitzkissen (12) und eine Rückenlehne (14) beinhaltet, wobei der Fahrzeugsitz (10) umfasst:
ein Plattenelement (18), das eine Sektion eines Rahmens (16) des Sitzkissens (12) strukturiert, das dazu ausgelegt ist, das Gesäß eines Passagiers zu tragen, wobei eine vordere Oberflächensektion (18D) des Plattenelements (18) an einem vorderen Teil des Fahrzeugsitzes (10) angeordnet ist und eine Fläche (18E) der vorderen Oberflächensektion (18D) einer Vorderseite des Fahrzeugsitzes (10, 26) zugewandt ist, und
ein energieaufnehmendes Element (22, 32), das entlang der Fläche (18E) der vorderen Oberflächensektion (18D) vorgesehen ist, und wobei das energieaufnehmende Element (22, 32) dazu ausgestaltet ist, sich irreversibel zu verformen, indem es in Richtung einer Rückseite des Fahrzeugsitzes (10, 26) gedrückt wird,
wobei das Plattenelement (18) aus einer Metallplatte gebildet ist, und das Plattenelement (18) eine Bodenflächensektion (18A), die sich in einer Front-Heck-Richtung und einer Querrichtung des Fahrzeugsitzes (10, 26) erstreckt, eine geneigte Oberflächensektion (18B), die sich von einem vorderen Ende der unteren Oberflächensektion (18A) aus erstreckt, um sich in Richtung einer oberen Seite zu neigen, während sie in Richtung der Sitzvorderseite verläuft, eine Spitzenoberflächensektion (18C), die sich von einem vorderen Ende der geneigten Oberflächensektion (18B) in Richtung der Sitzvorderseite erstreckt, wobei die Spitzenoberflächensektion (18C) im Wesentlichen parallel zu der Front-Heck-Richtung und der Querrichtung des Fahrzeugsitzes (10) ist, und die vordere Oberflächensektion (18D) aufweist, die sich von einem vorderen Ende der Spitzenoberflächensektion (18C) in Richtung einer Unterseite erstreckt.

2. Fahrzeugsitz (10) nach Anspruch 1, wobei:
ein Sitzkissenpolster (20) an den Rahmen (16) des Sitzkissens (12) montiert ist, und
das energieaufnehmende Element (22) einstückig mit dem Sitzkissenpolster (20) gebildet ist.

3. Fahrzeugsitz (10) nach Anspruch 1, wobei das energieaufnehmende Element (22) an der Fläche (18E) der vorderen Oberflächensektion (18D) fixiert ist.

4. Fahrzeugsitz (26) nach Anspruch 1, wobei:
das energieaufnehmende Element (32) ein Airbag (32) ist, der sich in einem Fall aufbläst, in dem sich der Passagier träge in Richtung der Rückseite des Fahrzeugsitzes (26) bewegt, und
mindestens eine Sektion des Airbags (32) nach dem Aufblasen entlang der Fläche (18E) der vorderen Oberflächensektion (18D) angeordnet ist.

5. Fahrzeugsitz (26) nach Anspruch 4, wobei:
ein Sitzkissenpolster (20) an den Rahmen (16) des Sitzkissens (12) montiert ist,
der Airbag (32) zwischen dem Rahmen (16) und dem Sitzkissenpolster (20) angeordnet ist, und
eine Sektion an einer Sitzvorderseite des Sitzkissenpolsters (20) dazu ausgestaltet ist, sich aufgrund des Aufblasens des Airbags in Richtung einer Sitzoberseite auszubauchen.

## Revendications

1. Siège de véhicule (10, 26) comprenant une assise de siège (12) et un dossier de siège (14), le siège de véhicule (10) comprenant :
un élément de panneau (18) qui structure une partie d'un cadre (16) de l'assise de siège (12), qui est prévu pour supporter les fesses d'un passager, une partie de surface avant (18D) de l'élément de panneau (18) étant disposée au niveau d'une partie avant du siège de véhicule (10), et une face (18E) de la partie de surface avant (18D) étant orientée vers un côté avant du siège de véhicule (10, 26) ; et
un élément d'absorption d''énergie (22, 32) qui est prévu le long de la face (18E) de la partie de surface avant (18D), et l'élément d'absorption d''énergie (22, 32) est configuré pour se déformer de manière irréversible en étant poussé vers un côté arrière du siège de véhicule (10, 26),
l'élément de panneau (18) étant formé par une plaque de métal, et l'élément de panneau (18) ayant une partie de surface inférieure (18A) qui s'étend dans une direction avant-arrière et une direction transversale du siège de véhicule (10, 26), une partie de surface inclinée (18B) qui s'étend depuis une extrémité avant de la partie de surface inférieure (18A) de façon à s'incliner vers un côté supérieur tout en se dirigeant vers le côté avant de siège, une partie de surface de sommet (18C) qui s'étend depuis une extrémité avant de la partie de surface inclinée (18B) vers le côté avant de siège, la partie de surface de sommet (18C) étant sensiblement parallèle à la direction avant-arrière et à la direction transversale du siège de véhicule (10), et à la partie de surface avant (18D), qui s'étend vers un côté inférieur depuis une extrémité avant de la partie de surface de sommet (18C).

2. Siège de véhicule (10) selon la revendication 1, dans lequel :
une garniture d'assise de siège (20) est montée sur le cadre (16) de l'assise de siège (12), et
l'élément d'absorption d''énergie (22) est formé d'un seul tenant avec la garniture d'assise de siège (20).

3. Siège de véhicule (10) selon la revendication 1, dans lequel l'élément d'absorption d''énergie (22) est fixé sur la face (18E) de la partie de surface avant (18D).

4. Siège de véhicule (26) selon la revendication 1, dans lequel :
l'élément d'absorption d''énergie (32) est un coussin gonflable (32) qui se gonfle dans un cas dans lequel le passager se déplace par inertie vers le côté arrière du siège de véhicule (26), et
au moins une partie du coussin gonflable (32) après gonflage est disposée le long de la face (18E) de la partie de surface avant (18D).

5. Siège de véhicule (26) selon la revendication 4, dans lequel :
une garniture d'assise de siège (20) est montée sur le cadre (16) de l'assise de siège (12),
le coussin gonflable (32) est disposé entre le cadre (16) et la garniture d'assise de siège (20), et
une partie sur un côté avant de siège de la garniture d'assise de siège (20) est configurée pour se renfler vers un côté supérieur de siège du fait du gonflage du coussin gonflable.
